# EUROPEAN PATENT SPECIFICATION

(11) **EP 1 316 896 B1**
(45) Date of publication and mention of the grant of the patent: **13.09.2006**
(21) Application number: 01128245.6
(22) Date of filing: 28.11.2001
(51) Int. Cl.: G06F 17/30, H04L 12/24, H04L 29/08, G06F 11/273

(54) **Method for remotely operating man-machine-interfaces**
Verfahren zur Fernbedienung von Mensch-Maschine-Schnittstellen
Méthode pour faire fonctionner à distance des interfaces homme-machine

(43) Date of publication of application: 04.06.2003
(73) Proprietor: Sony Deutschland GmbH, 50829 Köln (DE)
(72) Inventor: Szucs, Paul, Advanced Technology Center, 70327 Stuttgart (DE); Clanget, Ulrich, Advanced Technology Ct. Stuttgart, 70327 Stuttgart (DE)
(74) Representative: Müller - Hoffmann & Partner

(56) References cited:
- WO-A-00/45265
- WO-A2-02/44936
- ANDRIVET ET AL: "A SIMPLE XML PARSER" C/C++ USERS JOURNAL, R&D PUBLICATIONS, vol. 17, no. 7, 1 July 1999 (1999-07-01), page 22,24,26-28,30,32, XP008015172 LAWRENCE,KS,USA

## Description

The invention relates to a method, a remote controlling device, and a system for remotely operating man-machine-interfaces, and a man-machine-interface suitable therefore.

In recent years, it has become common to provide services from remote to users of electronic devices like personal computers, TV sets, PDAs, audio systems, and the like. The services are often directly offered via the respective electronic device currently used. For example, it is known to interactively provide teletext information from remote to a user of a TV set via a teletext service. This kind of remote user support being directly performed via the electronic device currently used shows the advantage that the user does not have to use a different device like a telephone in order to obtain/start the service offered by a corresponding service center.

Generally, the service is performed by conducting a dialog between the user and the service center. To do this, the user communicates with the service center (which may for example be represented by a remote controlling device like a computer) via a man-machine-interface (in the following only referred to as MMI) of the respective device. MMIs are means suitable for interactively communicate between a machine and a user, for example text displays, graphic displays, loudspeakers, keyboards, touchscreens, speech recognition systems or the like. Generally MMIs show both input devices and output devices.

However, different electronic devices generally show different man-machine-interfaces, respectively. This means that the possibilities how to communicate may be very different. In addition, MMIs of the same kind like text displays and graphic displays may differ from each other with respect to size and resolution.

To enable a service center to provide respective services to the user, it is therefore necessary for the service center to know which specific MMI a respective electronic device shows, in order to properly conduct a respective dialog between the service center and the user.

Document WO 00/45265 discloses a system and method for remotely diagnosing and repairing a plurality of Automatic Data Collection device platforms. A remote service technician utilizes a computing system having browsing software that communicates with a network of ADC platform devices. Diagnostic queries for particular DC devices may be retrieved by the browsing software from a diagnostic server that sends Hypertext Mark-Up Language document, Dynamic Hypertext Mark-Up Language documents, and/or Extensible Mark-Up Languge documents containing appropriate diagnostic applets. The remote technician sends diagnostic queries to a Simple Network Management Protocol ("SNMP") master agent at the ADC device platform, and a translator translates the diagnostic queries sent to the ADC device platform into a format suitable for reception by its ADC devices in order to effect anomaly diagnosis and functionality restoration. Another translator translates data received from the ADC device into the SNMP format for transmission to the remote service technician in order for the remote service technician to perform diagnostic analysis. The SNMP master agent communicates with the remote computing system using the Transmission Control Protocol, the User Datagram Protocol/Internet Protocol, and/or the User Datagram Plus Protocol. The ADC platform device may also utilize a wireless Communication system for communicating with the remote service technician.

Document WO02/44936A discloses to control remote devices using XML-documents. In this context, also document Andrivet et al.: "A simple XML parser" "C/C++Users Journal, R&D Publications Lawrence, KS, US. Vol. 17, No. 7, July 1999, XP008015172 has to be mentioned.

It is an object of the present invention to provide a method for operating MMIs via a remote controlling device in order to enable dialogues between users of said MMIs and the remote controlling device, said method being capable to deal with various kinds of MMIs in a transparent, simple manner.

To solve this object, the present invention provides a method for operating MMIs according to claim 1. Further, the present invention provides a remote controlling device according to claim 13. In addition, the present invention provides a MMI according to claim 16. Further, the present invention provides a system for remotely operating MMIs according to claim 22. Last, a computer program product according to claim 23 is provided. Further features and preferred embodiments are respectively defined in respective subclaims.

According to the present invention, a method for operating MMIs via a remote controlling device which is connectable to the MMIs via a communication network is provided, wherein the operating is performed by exchanging information of interactive dialogues between users of the MMIs and said remote controlling device between the remote controlling device and the MMIs to be operated via the communication network. The process of exchanging information is at least partially done by using a communication protocol being based on XML-documents which include the information. In the following, this information is also referred to as "MMI-correlated information"; further, the term "XML-document" is also referred to as "XML-script".

XML (Extensible Mark-Up Language) is a platform-independent language used to exchange information between devices being connected with each other via a communication network.

The above described method enables a very simple and transparent way to perform dialogues between a user and a remote controlling device, since this method makes it possible to exchange information without caring about how this information is finally presented to the user. This is due to the fact that XML as a platform-independent language is used to exchange the MMI-correlated information. Examples of MMI-correlated information are image data, text data or sound data.

Preferably, the XML-scripts comprise XML-tag-structures respectively containing parts of the MMI-correlated information. Examples of such XML-tag-structures will be given later on.

Basically, there are two ways of communicating between the remote controlling device and the MMIs: The exchanging of said XML-script is done directly between the remote controlling device and the MMIs, or the use of the XML-scripts to exchange the MMI-correlated information is used only between the remote controlling device and a gateway interfacing the MMIs and the controlling device. In the latter case, an MMI-specific transfer protocol may be used to exchange the MMI-correlated information between the gateway and the MMIs, wherein a gateway transfers the MMI-correlated information from/to the XML-scripts to/from the MMI-specific transfer protocol. A gateway may, for example, be used if the MMIs do not directly support XML.

Preferably, an extension of XML called SDML (Simple Dialog Mark-up Language) is defined to obtain a minimalistic user interface tool-kit for simple dialogs between an MMI and a user of said MMI. As will become apparent in the following description, SDML is not restricted to common MMIs like computer displays and keyboards. Instead, SDML provides the possibility to transform dialog elements (like text, graphic images, a simple layout for graphical user interfaces, an acquisition of user responses) between each other if there is a need therefore. For example, a text element may be converted into a synthesized speech if the MMI only comprises loudspeakers, but the remote controlling device sends a text element instead of sound data to the loudspeakers. This makes it possible to use minimum capability display devices (e. g. character display) and to split rendering/user feedback between various devices. There is the possibility for various rendering and input modes like graphics, speech synthesis/recognition, OSD (On Screen Display), push buttons or gesture for input.

As already mentioned, an important aspect is that SDML only cares about the information to be transferred from the remote controlling device to the MMIs and the information entered by a user into the MMI which is to be transferred back to the remote controlling device. In other words, SDML does not impose any output or input method on a target device: A MMI dynamically chooses on its own the way how MMI-correlated information sent from the remote controlling device to said MMI is presented to the user, and/or dynamically chooses on its own the way how information requested by the remote controlling device from the user has to be inputted into said MMI.

To enable this, at least parts of the MMI-correlated information sent from the remote controlling device to the MMIs may be rendered to create rendered communication information, wherein a rendered communication information is then presented on the MMIs as visible/audible communication information for respective users. Preferably, the step of creating of rendered communication information is performed within the MMIs itself. Another possibility would be to create said rendered communication information within the gateway, and then transferring a rendered communication information to the MMIs in order to finally present it to the user. In other words, the communication process may be completely decoupled from the rendering process.

In any case, said creating of rendered communication information is performed in dependence of respective rendering information which is assigned to the MMIs, respectively. For example, the rendering information may be respectively stored in the MMIs. Another example would be that the rendering information associated with several MMIs is stored within the gateway. In the latter case, the gateway decides about how to render respective MMI-correlated information which is done in dependence of the respective MMI to which the MMI-correlated information is addressed to. A further possibility would be to include rendering information into the MMI-correlated information. That is, the remote controlling device decides about how the information is to be rendered when it is received by the respective MMI or the gateway. However, in this case, the remote controlling device has to know about the rendering capabilities of the respective MMI.

Thus, in this embodiment, a common mechanism to communicate dialog contents like text data or graphic data while leaving the actual form of presenting said data on the respective MMIs in question is provided. That is, SDML does not place requirements on how elements are rendered. Only very basic rendering instructions, for example concerning relative text size and layout, may be provided in order to enable rudimentary dialog design. SDML more or less restricts to have MMI-correlated information conveyed to the user, and to return user responses to inquiries back to the remote controlling device. This has the advantage that a service center does not have to care about rendering topics being dependent on respective MMIs.

As already indicated, said MMIs preferably dynamically choose the way how to input desired information from the user into said MMIs according to input information respectively assigned to said MMIs, said input information being part of said MMI-correlated information or being stored within said MMIs and/or said gateway (4), respectively.

Dialog elements (like text, graphic images, a simple layout for graphical user interfaces, an acquisition of user responses) may be transformed between each other if there is a need therefore. For example, a text element may be converted into a synthesized speech if the MMI only comprises loudspeakers, but the remote controlling device sends a text element to the loudspeakers. Preferably, a conversion process between dialogoue elements is done in dependence of said rendering information/input information.

In order to perform the above-described method, the present invention provides a remote controlling device being connectable to MMIs to be operated via a communication network, the remote controlling device comprising communication means for exchanging information of interactive dialogues between users of said MMIs and said remote controlling device and the MMIs to be operated. The communication means comprises an XML-client-module having functionality to use XML-documents to define a communication protocol for sending and receiving said information.

Preferably, the communication means comprises an IP (Internet Protocol) layer, a TCP (Transport Control Protocol) layer using said IP layer, a socket layer using the TCP layer, wherein the XML-client-module performs its communication tasks by using the socket layer.

The remote controlling device advantageously comprises extracting means for extracting the MMI-correlated information from the XML-scripts and/or embedding means for embedding the MMI-correlated information into the XML-scripts.

In order to perform the above-described method, the present invention further provides a MMI being connectable to a remote controlling device via a communication network, the MMI comprising communication means for exchanging information of interactive dialogues between a user of the MMI and the remote controlling device between the MMI and the remote controlling device.

The communication means comprises a XML-server-module having functionality to use XML-documents to define a communication protocol for sending and receiving said information.

In a preferred embodiment, the MMI comprises means for dynamically choosing the way how MMI-correlated information sent from the remote controlling device to said MMI is presented to the user, and/or means for dynamically choosing the way how information requested by the remote controlling device is inputted into said MMI.

In a further preferred embodiment, the MMI comprises rendering means being connected to the communication means for dynamically rendering MMI-correlated information in dependence of rendering information assigned to the MMI. To do this, the MMI may further comprise storage means for storing the rendering information.

The MMI may further comprise input controlling means for handling input operations of a user with respect to the MMI dynamically according to input information assigned to the MMI which may also be stored in said storing means.

The communication means of the MMI in a preferred embodiment comprises an IP (Internet Protocol) layer, a TCP (Transport Control Protocol) layer being based upon the IP layer, and a socket layer being based upon the TCP layer, wherein the XML-server-module is based upon the socket layer.

Further, the MMI may comprise extracting means for extracting the MMI-correlated information from the XML-scripts and/or embedding means for embedding the MMI-correlated information into the XML-scripts.

The invention further provides a system for remotely operating MMIs, said system comprising a remote controlling device according to the present invention, and at least one MMI to be operated according to the present invention, wherein the remote controlling device and the at least one MMI to be operated are respectively connected via the communication network.

Last, the present invention provides a computer program product according to claim 23.

Further features, embodiments, and advantages of the present invention will be explained in the following description while making reference to the accompanying drawings, wherein:
- **Fig. 1**: shows a schematic drawing of the concept how to operate MMIs according to the present invention;
- **Fig. 2**: shows a char display as an example of an MMI according to the present invention;
- **Fig. 3**: shows an image display as an example of an MMI according to the present invention;
- **Figs. 4a to 4e**: show examples of different layouts of dialog boxes presentable on an image display as an MMI according to the present invention;
- **Fig. 5**: shows an example of an image to be displayed on a image display as an MMI according to the present invention;
- **Fig. 6**: shows a preferred embodiment of a system for operating MMIs according to the present invention;
- **Fig. 7**: shows preferred embodiment of protocol stacks used by the remote controlling device and the MMIs to exchange XML-scripts according to the present invention;
- **Fig. 8**: shows a flow chart of a dialog session performed between a remote controlling device and a user of a respective MMI according to the present invention; and
- **Fig. 9**: shows a dialog sequence diagram illustrating different possible dialogue examples according to the present invention.

In the following, making reference to the drawings, a preferred embodiment of a SDML package will be described.

In this embodiment, an individual SDML dialog is based on the model of either a statement or an enquiry. With a statement, information or instructions are conveyed to the user. With an enquiry, a user response is acquired as a result of a question posed by the system.

The communication process is initiated with a question by the MMI (for example delivered from the remote controlling device) and should be answered by the user who wants to communicate with the MMI (remote controlling device). Intrinsically, the communication process is initiated by the user while turning on the MMI, the initial step is made by the MMI which offers the user some options.

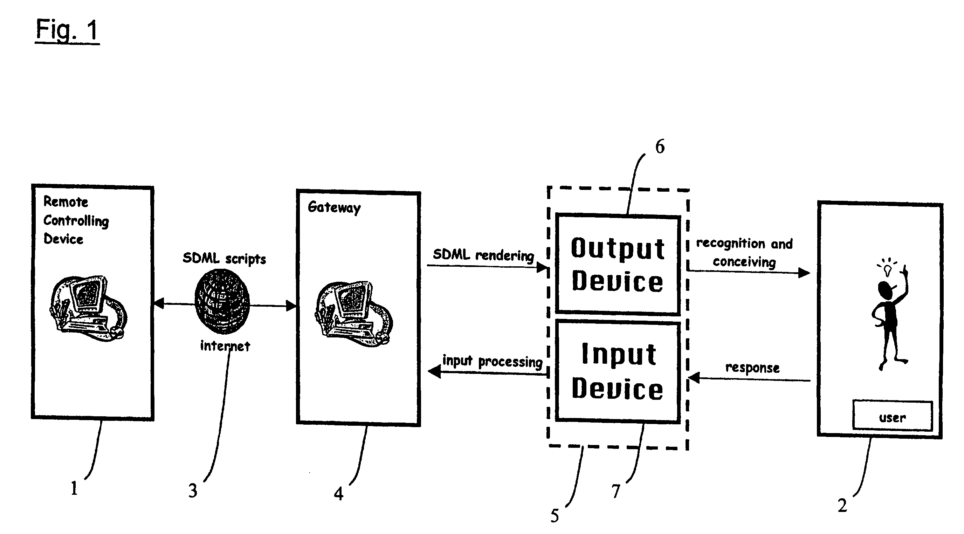

According to Fig. 1, a remote controlling device 1 initiates a dialog with the user 2 via the Internet 3 which connects the remote controlling device 1 for example to the user's home gateway device 4. The communication protocol underlying the exchanging process of the SDML-scripts (which are XML-scripts) between the remote controlling device 1, the gateway 4 or the MMI 5 (which comprises an output device 6 and/or an input device 7) is not defined by SDML and can be anything, e. g. the TCP/IP protocol. A SDML-script is sent from the remote controlling device 1 to the gateway 4 (or to the device comprising the MMI 5 itself). In any case, the SDML-script is sent to a location where a SDML-interpreter resides, which is not necessarily the gateway 4. If the output/input devices 6, 7 (MMIs) are IP-capable, then SDML-scripts can be addressed directly to those devices.

The SDML-script being sent comprises a dialog's definition. If this script is sent to an output device, the output device parses the SDML-script and renders the user interface elements which describe an enquiry or a statement to the output device 6. The user 2 perceives this question and answers it via an input device 7. The home gateway 4 or SDML-interpreter then generates the SDML-response script which is sent back to the remote controlling device 1. A statement should be responded to with an empty answer. That is, statements do not need an answer, but nevertheless may be acknowledged by an empty answer tag. The remote controlling device 1 sends, possibly depending on this answer, the next enquiry or statement, in the form of another SDML-dialog. This depends on the remote application logic.

In compliance with XML-syntax, an SDML-script starts with the main tag which identifies the language, **<sdml>.** The main tag must be followed by a **<header>** tag which contains some property tags for the following script.

| <transactionid> | Optional | ID to uniquely identify the dialog, possibly to link several sub-dialogs |
|---|---|---|
| <preferredoutputmedia> <medium></medium> ... <medium></medium> | Optional | Preferred media to render the dialog. There are predefined values for this tag which are enclosed by a <medium> tag. Proprietary tags can be used, but if the render engine does not understand these values, it should ignore them. |
| | | **VISUAL -** general visual output |
| | | **AUDIO -** general audio output |
| | | **DISPLAY -** general display output |
| | | **CHARDISPLAY -** character displays |
| | | **GRAPHICDISPLAY** - graphical displays |
| | | The <medium> tag's order defines the preferred media choice. The first <medium> tag is the most preferred medium. |

### Example:

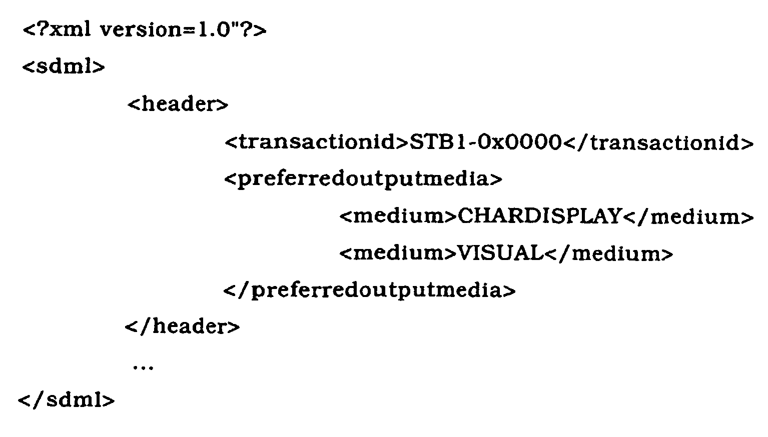

The header section is followed by the actual dialog contents.

The dialog is enclosed by the **<dialog>** tag. Subtags are **<enquiry>** or **<statement>,** for one of them is required. The <enquiry> or <statement> tag holds subtags for the user interface and process elements. If the dialog contains a question, a **<choicelist>** subtag (see below) must be defined inside the <enquiry> tag.
The following elements may for example be defined:
- Text
- Pictures
- Layout Management
- Spaces
- Choicelist
- Delay

A text tag (**<text>**) displays information which is normally the question or the statement to the user. Textfields have different styles on different output media. On displays the text is rendered but on an audio output devices the text is spoken by e. g. a speech synthesis software. <text> tags may contain a size attribute in range [1..10] to enable the variation of text size within a dialog. This attribute is relative and provides only an indication, not any absolute size. The upper boundary is the biggest text size.

### Example:

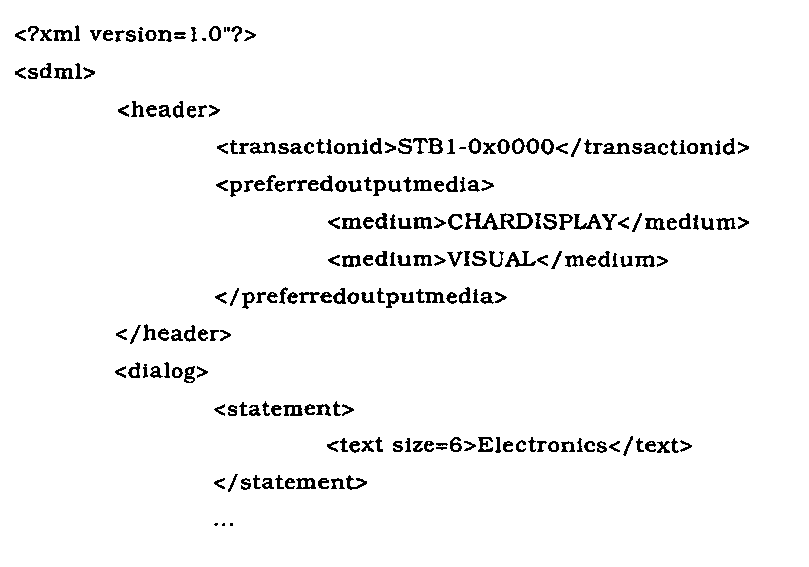

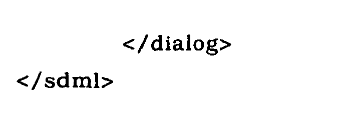

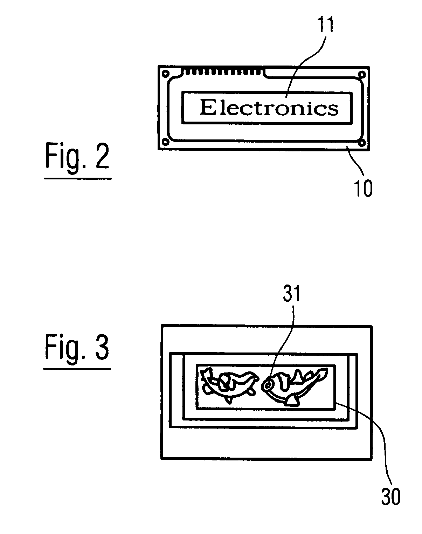

The SDML-script given above may for example be rendered as shown in Fig. 2, which shows a text display 10 and text "Electronics" 11.
A picture tag **(<picture>)** defines an image to improve the visual output or to force a statement. The picture is declared with two subtags. The **<alt>** tag is an alternate text entry for the picture, if it cannot be rendered by the output device 6. In this case a render engine should use the alternate text to display the information. If the tag is missing, a render engine for non-graphic devices should ignore the picture and assume it is not important.

The data tag <data> contains the data defining the actual bitmap image to be displayed. This data preferably is in textual PNG (Portable Network Graphics stadard) format. With this format, each data byte of the binary PNG file is represented in text form as a 2-digit hexadecimal number. Leading zeros must be included.

### Example:

| | | | | | | | | |
|---|---|---|---|---|---|---|---|---|
| Binary data: | 1111 | 1001 | 1011 | 1110 | 0000 | 1010 | 0100 | 1011 |
| Hexadecimal representation: | F | 9 | B | E | 0 | A | 4 | B |

Enclosed in an XML-tag:
<bindata>F9BE0A4B</bindata>

This method of coding binary data is for example described at www.xml.org. Also described there is IML (Image Markup Language), an XML schema for storing GIF and JPG images.

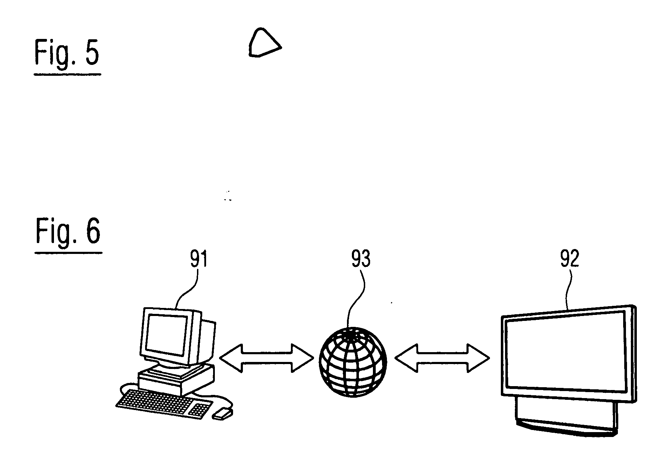

In the following, making reference to Fig. 5, the way of coding the image shown in Fig. 5 is described.

The first 20 PNG binary bytes, in decimal of said image are:
137 80 78 71 13 10 26 10 0 0 0 13 73 72 68 82 0 0 0 32
expressed in converted bytes:
89504e470d0a1a0a0000000d4948445200000020

Thus, the whole picture tag may be coded as follows:

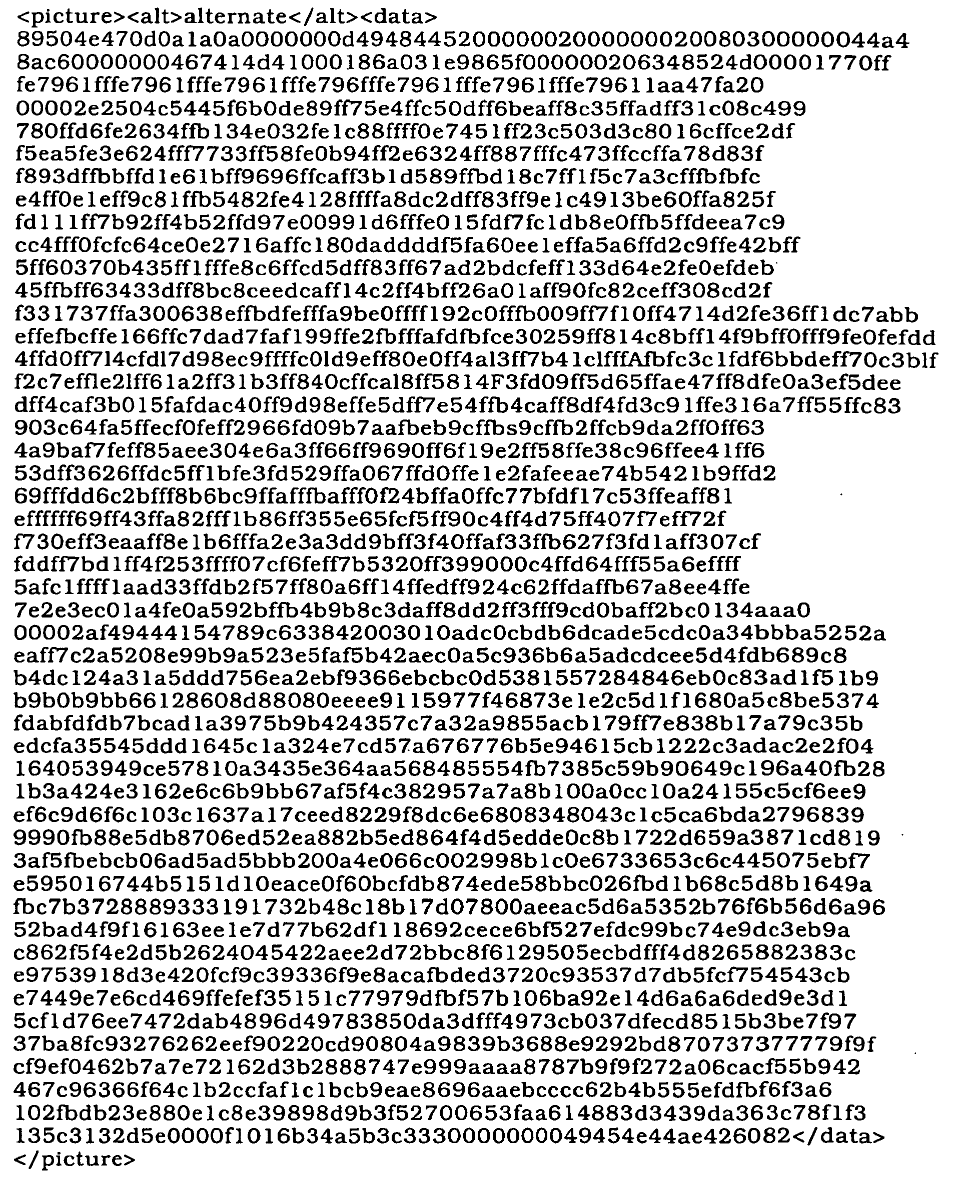

The width and the height are taken out of the picture and measured in pixels, so they can be different for two output devices 6. Then, the render engine should resize the pictures to fit them on the screen.

### Example:

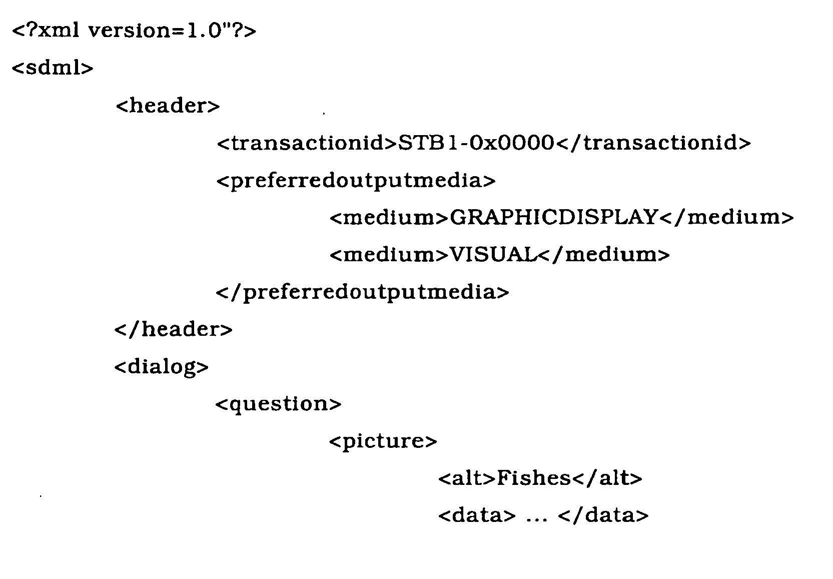

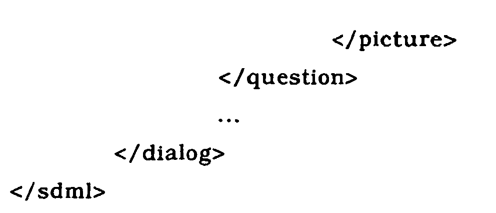

The SDML-script given above may be rendered as shown in Fig. 3, wherein an image display 30 shows an image of fishes 31.

Simple layout management is supported for visual output devices. Other output devices 6 should ignore this data. There are two layout schemes which can be nested multiply. The first one is a horizontal layout to position elements in a horizontal line. The vertical layout puts elements in a vertical line. With these two simple layout schemes, more complex layouts can be generated (e. g. grids).

### Horizontal layout:

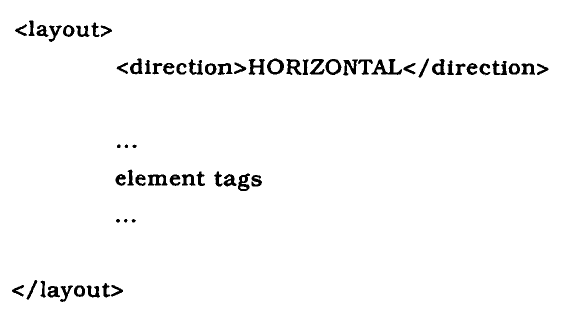

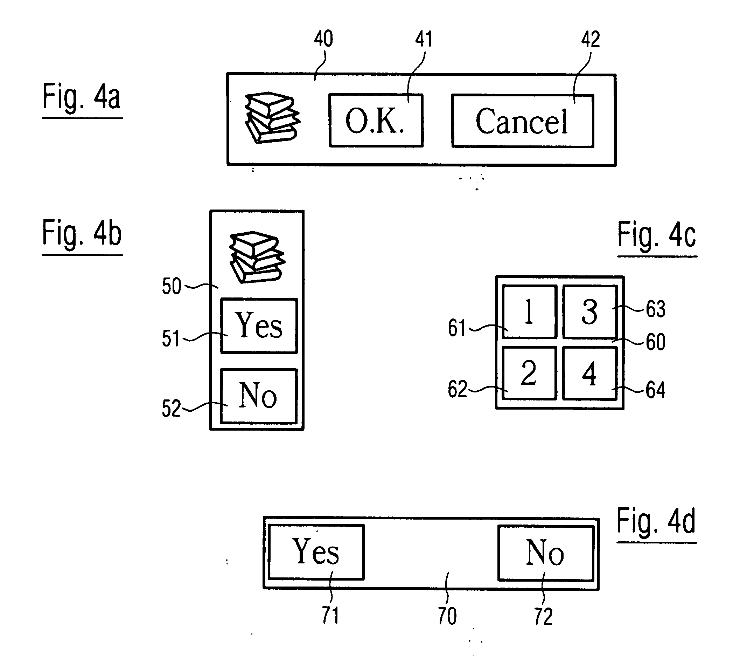

The SDML-script given above may for example be rendered as shown in Fig. 4a, wherein an image 40 comprises a OK-button 41 and a CANCEL-button 42.

### Vertical layout:

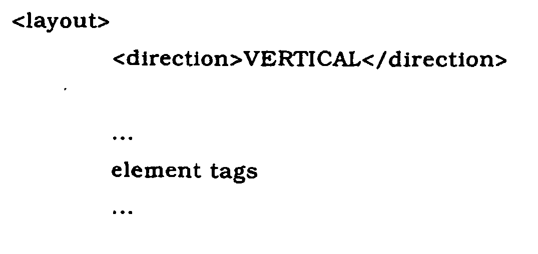

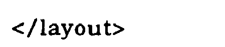

The SDML-script given above may for example be rendered as shown in Fig. 4b, wherein an image 50 comprises an YES-button 51 and a NO-button 52. Complex layout example:

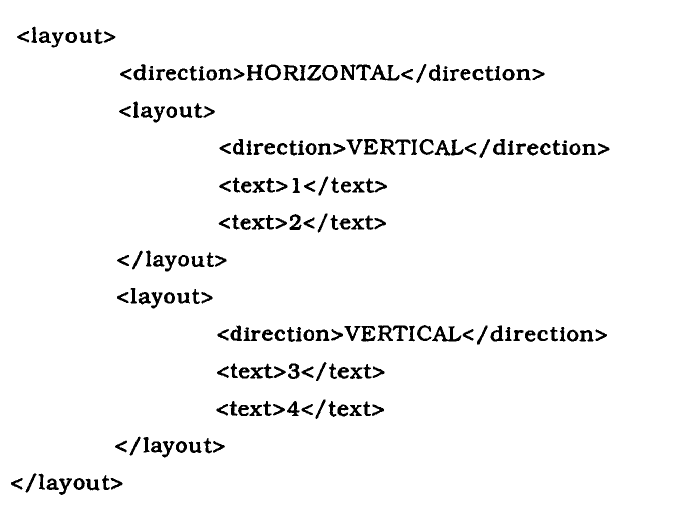

The SDML-script given above may for example be rendered as shown in Fig. 4c, wherein an image 60 comprises an "1"-button 61, a "2"-button 62, a "3"-button 63 and a "4"-button 64.

Spaces can be used to improve the layout capabilities of a dialog. They have a width and/or a height, measured in pixels and act as a placeholder between the elements, but invisible. The width and height can be different for two output media, so the rendering engine should resize the spaces, like it should do for pictures. If one of width or height is missing, the render engine should fill the space within the current <layout></layout> context. Spaces are defined by the following tag:

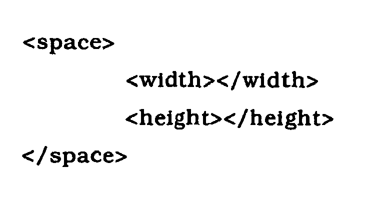

### Example:

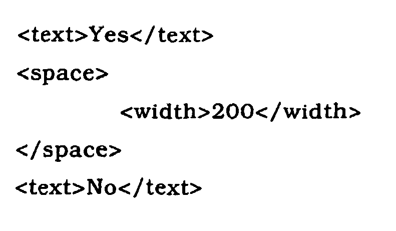

The SDML-script given above may for example be rendered as shown in Fig. 4d, wherein an image 70 comprises a YES-button 71 and a NO-button 72.

In this example, the height tag is not defined as this would have no effect in this dialog.

A <delay> tag is used to specify the time an <enquiry> or <statement> is displayed. The delay tag should only be used at the end of an SDML script. The delay time is specified in seconds. The render engine interprets this time as a relative value, because each output medium handles delays different, e. g. in a speech output medium the delay may be shortened.

A choicelist is a part of a question and allows the user to answer the question asked. It is not part of the user interface elements, but it should be isolated from the user interface. It is up to the render engine to choose an appearance for the choices and to separate them from the user interface. A choicelist is defined by a <choicelist> tag with subtags for all choices (<choice>) which hold the textual description.

### Example:

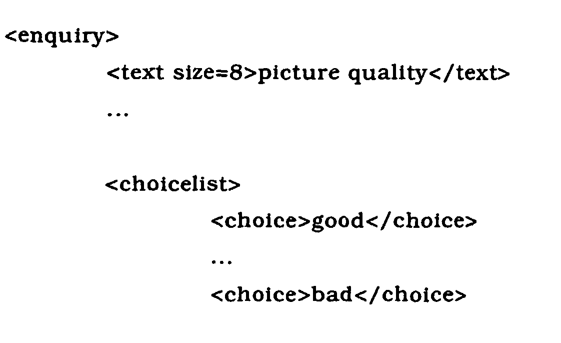

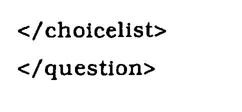

User responses are enclosed in a <response> tag and contain the content of the user's selected item of the choicelist.

### Example:

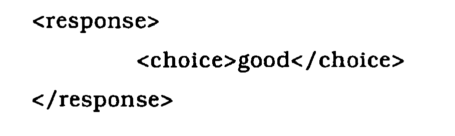

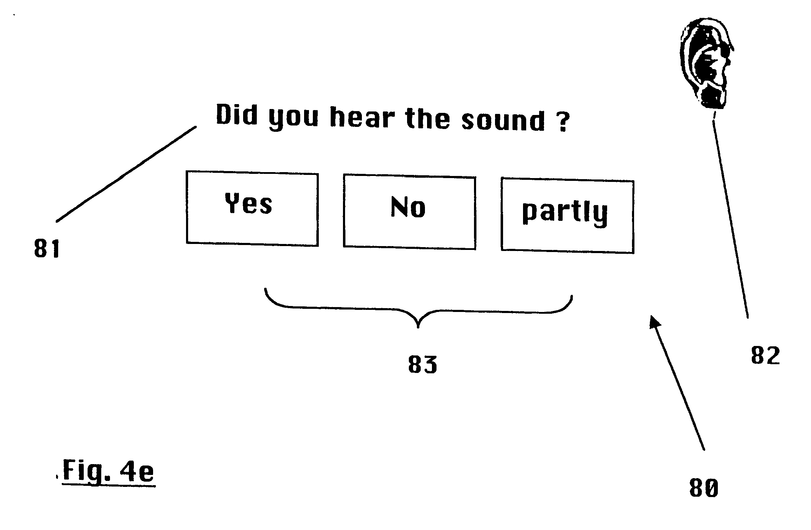

According to Fig. 4e, the following example dialog 80 puts the question "Did you hear the sound?" 81 as text to the user, with an accompanying illustrative bitmap image 82, and offers a choicelist 83 with three options for the user to respond.

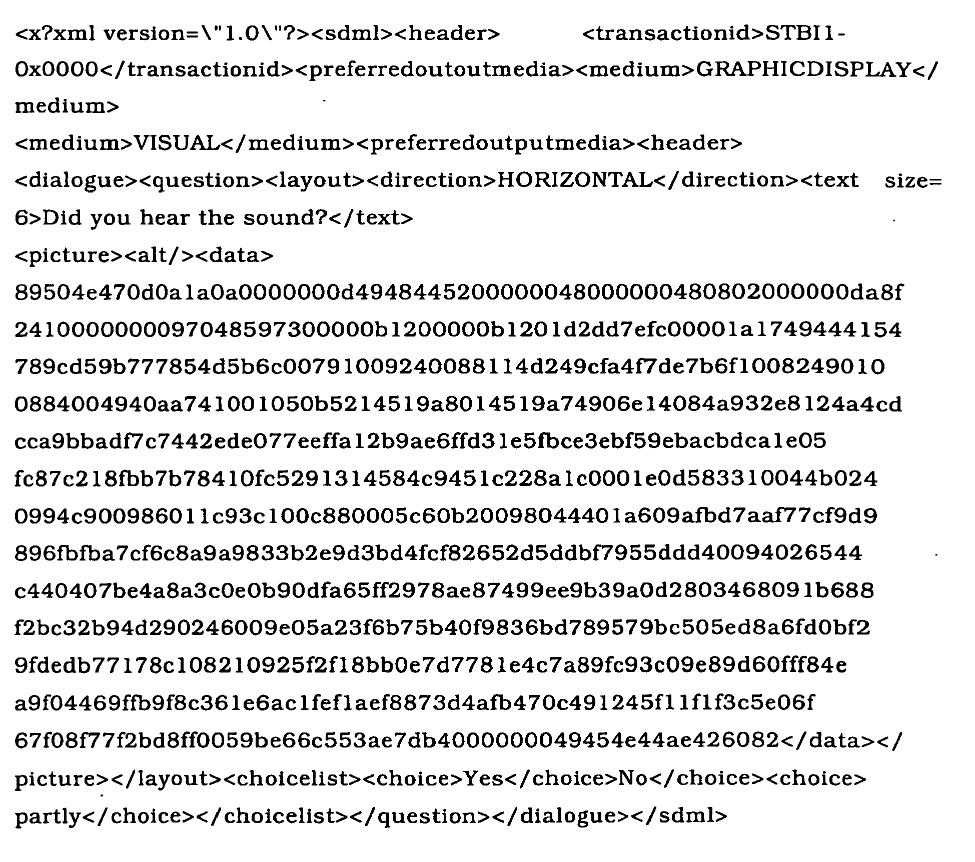

In the following description, making reference to Fig. 6, a preferred embodiment of a system for remotely operating a MMI will be described.

A system 90 comprises a remote terminal (RT) 91, a user terminal (UT) 92 and the Internet as an IP-based network 93 which connects the remote terminal 91 and the user terminal 92. The application is that a remote terminal operator or automatic software agent needs to convey information to a user who is present at his user terminal 92, also to aquire user feedback via the user terminal 92. This is performed within a SDML dialogue session.

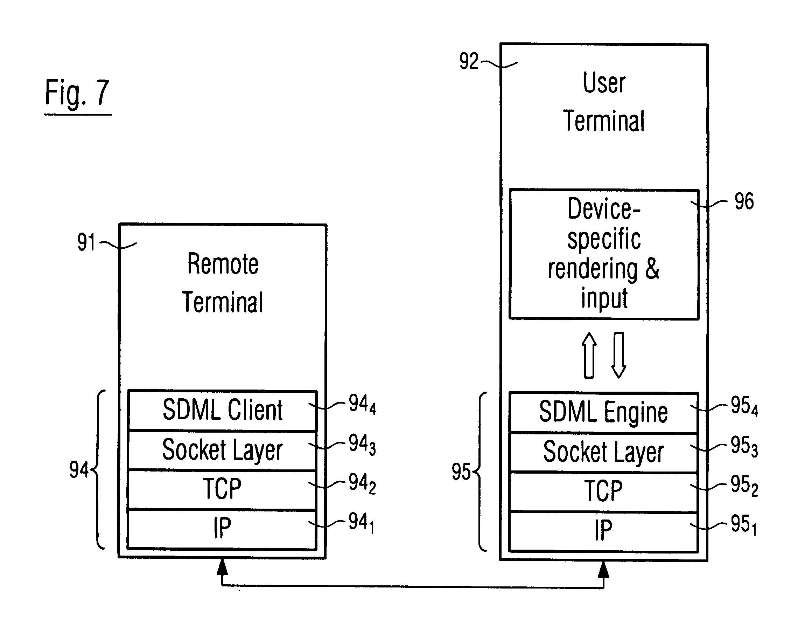

In the following description, making reference to Fig. 7, preferred embodiments of protocol stacks used by the remote terminal 91 and the user terminal 92 of Fig. 1 are described.

A first protocol stack 94 located within the remote terminal 91 comprises an Internet protocol layer 94₁, a transport control protocol 94₂ layer using said Internet protocol layer 94₁, a socket layer 94₃ using said transport control protocol layer 94₂, and a XML-client-module 94₄ comprising a SDML-client which performs its communication tasks by using said socket layer 94₃. Accordingly, a second protocol stack 95 located within the user terminal 92 comprises an Internet protocol layer 95₁, a transport control protocol 95₂ layer using said Internet protocol layer 95₁, a socket layer 95₃ using said transport control protocol layer 95₂, and a XML-server-module 95₄ comprising a SDML-engine which performs its communication tasks by using said socket layer 95₃. The user terminal 92 further comprises a rendering module/input controlling means 96 which renders MMI-correlated information supplied by the XML-server-module 95₄ in dependence of user terminal specific rendering information. The Internet protocol layers 94₁ and 94₂ are connected with each other via an IP-socket connection 97 to communicate with each other. The SDML-engine in the user terminal 92 permanently listens for client requests on the prescribed socket and thus acts as a server for SDML-scripts. A dialogue session is preferably initiated by the SDML-client.

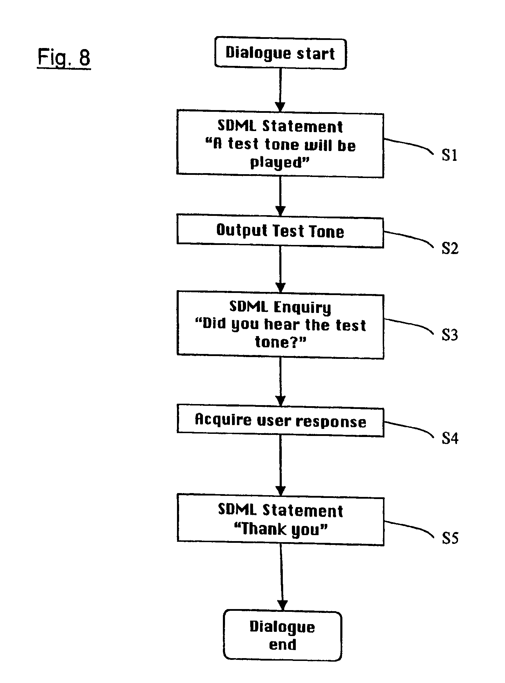

In the following description, making reference to Fig. 8, an example of a dialogue session will be given.

After having started the dialogue, in a first step S1, a SDML-statement "A test tone will be played" is shown on the MMI of the user terminal 92 (sent from the remote terminal 91 to the MMI). In a second step S2, a test tone is outputted via the MMI. Then, in a third step S3, a SDML-enquiry "Did you hear the test tone?" is performed via the MMI. Then, in a fourth step S4, a user response is aquired. Then, in a fifth step S5, a SDML-statement " Thank you" is shown on the MMI. Then, the dialogue is terminated. The practical application of this dialogue is that the remote terminal 91 informs the user that he will execute a test tone on the user terminal 92. The user responds to an enquiry to verify if the test tone playback was successful.

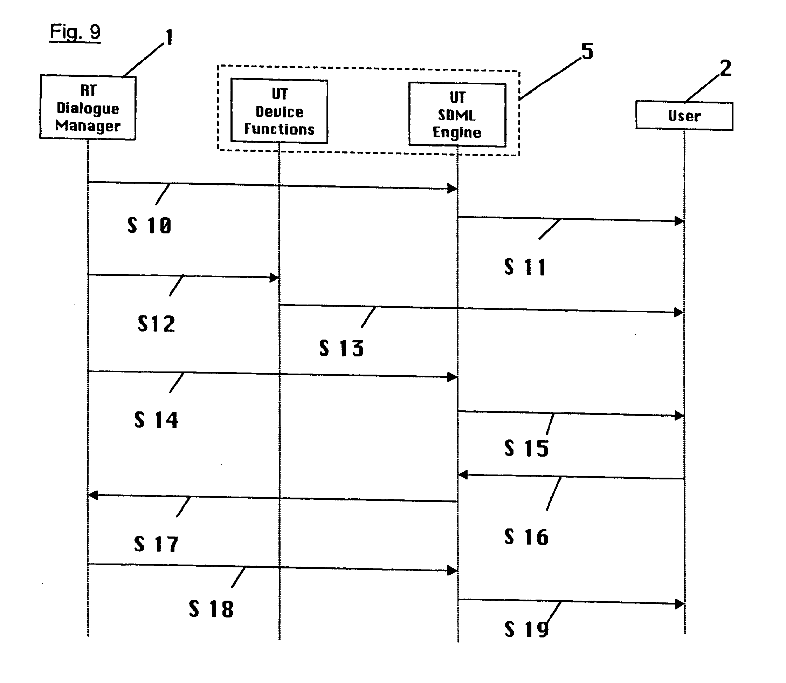

In the following description, making reference to Fig. 9, a sequence diagram corresponding to the dialogue shown in Fig. 8 will be given. Three physical embodiments of the same scenario are described. Each shows a different realization of the same SDML-dialogue session (Fig. 8), highlightning its flexibility and power, despite its simple nature. The flow chart of Fig. 8 and the sequence diagram of Fig. 9 are basically the same in each case, as is the MMI-correlated information (SDML contents) transferred between the remote terminal 91 (SDML-client) and the user terminal 92 (SDML-engine). The difference in each case are how the device specific SDML-engine renders and acquires user feedback.

In the first example, a device scenario shown in Fig. 6 applies. The user terminal 92 is a TV set (analogue or digital) which has an Internet connection whether directly from the TY set, e. g. via modem, or indirectly via a home network interface to a home router/gateway. The TV set has graphic capabilities which are used to display information visually, and user feedback is aquired via the TV remote control.

In a tenth step S10 a SDML-statement is sent from the dialogue manager (remote terminal 91) to the SDML-engine (user terminal 92). In a eleventh step S11 the SDML-engine outputs the text box on the TV screen. In a twevth step S12 and thirteenth step S13 the test tone is triggered in the user terminal 92. This step is not part of SDML, it is part of the device specific functionality (the SDML-engine is not used). In a fourteenth step S14 a SDML-enquiry is sent from the dialogue manager to the SDML-engine. In a fifteenth step S15 the SDML-engine outputs the enquiry text box on the TV screen. In a sixteenth step S16 the MMI passes on the user selection - "Yes" or "No" button pressed, to the SDML-engine. In a seventeenth step S17 the user response is passed by the SDML-engine to the remote dialogue manager. In an eighteenth step S18, a SDML-statement is sent from the dialogue manager to the SDML-engine, and in an nineteenth step S19 a text box is outputted by the SDML-engine on the TV screen.

In the second example, the user terminal 92 is an audio device with an audio input, e. g. built-in microphone, for user feedback. This device has only a simple character display and some keys for user input. Steps S10 to S15 correspond to those of the previous example. The only difference is that the TV screen is replaced by a character display. Step S16, however, is different: because the user terminal has no graphical MMI, and can not display buttons as user interface elements, it knows how it can best indicate to the user which of the front panel keys means "Yes" and which mean "No", e.g. flashing background LED's on buttons "1" and "2" with an additional corresponding tip inside the character display, e.g. "Press 1 for Yes, 2 for No". This is the device specific part and not part of the SDML-dialogue itself. The user terminal MMI passes on the user selection - "Yes" or "No" button pressed, to the SDML-engine. Step S19 corresponds to that of the previous example.

In the third example, the user terminal 92 is an audio/video device with text-speech interpretation and speech synthesis for audio output and speech recognition on an audio input, e.g. built-in microphone, for user feedback.

In this example, in the tenth step S10 a SDML-statement is sent from the dialogue manager (remote terminal 91) to the SDML-engine (user terminal 92). In the eleventh step S11 the SDML-engine speaks a message to the user. In the twevth step S12 and thirteenth step S13 the test tone is triggered in the user terminal 92. This step is not part of SDML, it is part of the device specific functionality (the SDML-engine is not used). In the fourteenth step S14 a SDML-enquiry is sent from the dialogue manager to the SDML-engine. In the fifteenth step S15 the SDML-engine verbally asks the question. In the sixteenth step S16 the MMI passes on the user selection - the user terminal 92 recognizes the verbally spoken answer "Yes" or "No" and converts that to the appropriate dialogue choice in SDML. In the seventeenth step S17 the user response is passed by the SDML-engine to the remote dialogue manager. In the eighteenth step S18, a SDML-statement is sent from the dialogue manager to the SDML-engine, and in the nineteenth step S19 the SDML-engine speaks the statement to the user.

## Claims

1. Method for operating man machine interfaces (5) via a remote controlling device (1) which is connectable to said man machine interfaces (5) via a communication network (3), wherein said operating is performed by exchanging information of interactive dialogues between users of said man machine interfaces and said remote controlling device (1) between said remote controlling device (1) and said man machine interfaces (5) to be operated via said communication network (3),
wherein
said process of exchanging information is at least partially done by using in both directions a communication protocol being based on XML-documents which include said information.

2. Method according to claim 1, **characterized in that** said XML-documents comprise XML-tag structures which respectively contain parts of said information.

3. Method according to claim 1 or 2, **characterized by** using said XML-documents to exchange said information between said remote controlling device (1) and a gateway (4) interfacing said man machine interfaces (5) and said controlling device, and using a man machine interface-specific transfer protocol to exchange said information between said gateway (4) and said man machine interfaces (5), wherein said gateway (4) transfers said information from said XML-documents to said man machine interface-specific transfer protocol, or transfers said information from said man machine interface-specific transfer protocol to said XML-documents.

4. Method according to anyone of the claims 1 to 3, **characterized in that** a man machine interface (5) dynamically chooses on its own the way how information sent from the remote controlling device (1) to said man machine interface (5) is presented to the user (2), and/or dynamically chooses on its own the way how information requested by the remote controlling device (1) from the user (2) has to be inputted into said man machine interface (5).

5. Method according to anyone of the claims 1 to 4, **characterized in that** at least a part of said information sent from said remote controlling device (1) to said man machine interfaces (5) is rendered to create rendered communication information, said rendered communication information then being presented on said man machine interfaces (5) as visible or audible communication information for respective users (2).

6. Method according to claim 5, **characterized in that** said creating of rendered communication information is performed within the man machine interfaces (5).

7. Method according to a combination of claims 3 and 5, **characterized in that** said creating of rendered communication information is performed within said gateway (4), wherein said rendered communication information is then transferred to said man machine interfaces (5) to be presented for the user (2).

8. Method according to claim 6 or 7, **characterized in that** said creating of rendered communication information is performed in dependence of respective rendering information assigned to said man machine interfaces (5), respectively.

9. Method according to claim 8, **characterized in that** said rendering information is part of said information or is stored within said man machine interfaces (5) and/or said gateway (4), respectively.

10. Method according to anyone of the preceding claims, **characterized in that** said information comprises image data and/or text data and/or sound data.

11. Method according to a combination of claims 8 and 10, **characterized in that** said image data and/or text data and/or sound data is rendered in dependence of said rendering information.

12. Method according to anyone of the preceding claims, **characterized in that** said man machine interfaces (5) dynamically choose the way how to input desired information from the user (2) into said man machine interfaces (5) according to input information respectively assigned to said man machine interfaces, said input information being part of said man machine interface-correlated information or being stored within said man machine interfaces (5) and/or said gateway (4), respectively.

13. Remote controlling device (1) being connectable to man machine interfaces (5) to be operated via a communication network (3), said remote controlling device (1) comprising communication means (94) for exchanging information of interactive dialogues between users of said man machine interfaces and said remote controlling device (1) between said remote controlling device (1) and said man machine interfaces to be operated, wherein said communication means (94) comprises an XML-client-module (944) having functionality to use a communication protocol based on XML documents for sending and receiving said information.

14. Remote controlling device (1) according to claim 13, **characterized in that** said communication means (94) further comprises an Internet protocol layer (94₁), a transport control protocol layer (94₂) using said Internet protocol layer (94₁), a socket layer (94₃) using said transport control protocol layer (94₂), wherein said XML-client-module (94₄) performs its communication tasks by using said socket layer (94₃).

15. Remote controlling device (1) according to claim 13 or 14, **characterized by** extracting means for extracting said information from said XML-documents and/or embedding means for embedding said information into said XML-documents.

16. Man machine interface (5) being connectable to a remote controlling device (1) via a communication network (3), said man machine interface (5) comprising communication means (95) for exchanging information of interactive dialogues between a user of said man machine interface and said remote controlling device (1) between said man machine interface and said remote controlling device (1), wherein said communication means (95) comprises an XML-server-module (95₄) having functionality to use a communication protocol based on XML documents for sending and receiving said information.

17. Man machine interface (5) according to claim 16, **characterized by** comprising means for dynamically choosing the way how information sent from the remote controlling device (1) to said man machine interface (5) is presented to the user (2), and/ or means for dynamically choosing the way how information requested by the remote controlling device (1) is inputted into said man machine interface (5).

18. Man machine interface (5) according to claim 16 or 17, **characterized by** rendering means (96) being connected to said communication means (95) for dynamically rendering information in dependence of rendering information assigned to said man machine interfaces (5).

19. Man machine interface (5) according to anyone of the claims 16 to 18, **characterized by** input controlling means (96) for handling input operations of said user (2) with respect to said man machine interface (5) dynamically according to input information assigned to said man machine interface (5).

20. Man machine interface (5) according to anyone of the claims 16 to 19, **characterized in that** said communication means (95) further comprises an Internet protocol layer (95₁), a transport control protocol layer (952) being based upon said Internet protocol layer (95₁), a socket layer (95₃) being based upon said transport control protocol layer (95₂), wherein said XML-server-module (95₄) is based upon said socket layer (95₃).

21. Man machine interface (5) according to anyone of the claims 16 to 20, **characterized by** extracting means for extracting said information from said XML-documents and/or embedding means for embedding said information into said XML- documents.

22. System for remotely operating man machine interfaces (5), comprising:
- a remote controlling device (1) according to anyone of the claims 13 to 15,
- at least one man machine interface (5) to be operated according to anyone of the claims 16 to 21, wherein said remote controlling device (1) and said at least one man machine interface (5) to be operated are respectively connected via said communication network (3).

23. Computer program product comprising computer program means adapted to perform the method according to anyone of the claims 1 to 12 when it is executed on a set of devices, each one being a computer or a digital signal processor, said set of devices including said man machine interfaces and said remote controlling device.

## Patentansprüche

1. Verfahren zum Bedienen von Mensch-Maschine-Schnittstellen (5) über eine Fernsteuervorrichtung (1), die mit den Mensch-Maschine-Schnittstellen (5) über ein Kommunikationsnetz (3) verbindbar ist, wobei das Bedienen durch ein Austauschen von Information interaktiver Dialoge zwischen Benutzern der Mensch-Maschine-Schnittstellen und der Fernsteuervorrichtung (1) zwischen der Fernsteuervorrichtung (1) und den Mensch-Maschine-Schnittstellen, die über das Kommunikationsnetz (3) zu bedienen sind, durchgeführt wird,
wobei der Prozess zum Austauschen von Information zumindest teilweise unter Verwendung, in beiden Richtungen, eines Kommunikationsprotokolls ausgeführt wird, das auf XML-Dokumenten basiert ist, die die Information einschließen.

2. Verfahren nach Anspruch 1, **dadurch gekennzeichnet, dass** die XML-Dokumente XML-Markerstrukturen umfassen, die jeweils Teile der Information enthalten.

3. Verfahren nach Anspruch 1 oder 2, **gekennzeichnet durch** ein Verwenden der XML-Dokumente, um die Information zwischen der Fernsteuervorrichtung (1) und einem Gateway (4) auszutauschen, der die Mensch-Maschine-Schnittstellen (5) und die Steuervorrichtung verbindet, und ein Verwenden eines Mensch-Maschine-Schnittstellen-spezifischen Übertragungsprotokolls, um die Information zwischen dem Gateway (4) und den Mensch-Maschine-Schnittstellen (5) auszutauschen, wobei der Gateway (4) die Information von den XML-Dokumenten zu dem Mensch-Maschine-Schnittstellen-spezifischen Übertragungsprotokoll überträgt, oder die Information von dem Mensch-Maschine-Schnittstellen-spezifischen Übertragungsprotokoll zu den XML-Dokumenten überträgt.

4. Verfahren nach einem der Ansprüche 1 bis 3, **dadurch gekennzeichnet, dass** eine Mensch-Maschine-Schnittstelle (5) dynamisch auf ihre eigene Weise auswählt, wie eine Information, die von der Fernsteuervorrichtung (1) zu der Mensch-Maschine-Schnittstelle (5) gesendet ist, dem Benutzer (2) dargestellt wird, und/oder dynamisch auf ihre eigene Weise auswählt, wie eine Information, die von der Fernsteuervorrichtung (1) angefordert wird, von dem Benutzer (2) in die Mensch-Maschine-Schnittstelle (5) einzugeben ist.

5. Verfahren nach einem der Ansprüche 1 bis 4, **dadurch gekennzeichnet, dass** zumindest ein Teil der Information, die von der Fernsteuervorrichtung (1) zu den Mensch-Maschine-Schnittstellen (5) gesendet wird, gerendert wird, um eine gerenderte Kommunikationsinformation zu erzeugen, wobei die gerenderte Kommunikationsinformation dann auf den Mensch-Maschine-Schnittstellen (5) als eine sichtbare oder hörbare Kommunikationsinformation für jeweilige Benutzer (2) dargestellt wird.

6. Verfahren nach Anspruch 5, **dadurch gekennzeichnet, dass** das Erzeugen der gerenderten Kommunikationsinformation innerhalb der Mensch-Maschine-Schnittstellen (5) durchgeführt wird.

7. Verfahren nach einer Kombination der Ansprüche 3 und 5, **dadurch gekennzeichnet, dass** das Erzeugen der gerenderten Kommunikationsinformation innerhalb des Gateways (4) durchgeführt wird, wobei die gerenderte Kommunikationsinformation dann zu den Mensch-Maschine-Schnittstellen (5) übertragen wird, um für den Benutzer (2) dargestellt zu werden.

8. Verfahren nach Anspruch 6 oder 7, **dadurch gekennzeichnet, dass** das Erzeugen der gerenderten Kommunikationsinformation in Abhängigkeit jeweiliger Render-Information durchgeführt wird, die der Mensch-Maschine-Schnittstelle jeweils zugeordnet ist.

9. Verfahren nach Anspruch 8, **dadurch gekennzeichnet, dass** die Render-Information ein Teil der Information ist oder innerhalb der Mensch-Maschine-Schnittstellen (5) und/oder des Gateways (4) jeweils gespeichert ist.

10. Verfahren nach einem der voranstehenden Ansprüche, **dadurch gekennzeichnet, dass** die Information Bilddaten und/oder Textdaten und/oder Tondaten umfasst.

11. Verfahren nach einer Kombination der Ansprüche 8 und 10, **dadurch gekennzeichnet, dass** die Bilddaten und/oder die Textdaten und/oder die Tondaten in Abhängigkeit von der Render-Information gerendert werden.

12. Verfahren nach einem der voranstehenden Ansprüche, **dadurch gekennzeichnet, dass** die Mensch-Maschine-Schnittstellen (5) dynamisch die Weise auswählen, wie eine gewünschte Information von dem Benutzer (2) in die Mensch-Maschine-Schnittstellen (5) gemäß einer Eingabeinformation einzugeben sind, die jeweils den Mensch-Maschine-Schnittstellen zugeordnet ist, wobei die Eingabeinformation ein Teil der Mensch-Maschine-Schnittstellen-korrelierten Information ist oder innerhalb der Mensch-Maschine-Schnittstellen (5) und/oder des Gateways (4) jeweils gespeichert ist.

13. Fernsteuervorrichtung (1), die mit Mensch-Maschine-Schnittstellen (5) verbindbar ist, die über ein Kommunikationsnetz (3) zu bedienen sind, wobei die Fernsteuervorrichtung (1) eine Kommunikationseinrichtung (94) zum Austauschen von Information interaktiver Dialoge zwischen Benutzern der Mensch-Maschine-Schnittstellen und der Fernsteuervorrichtung (1) zwischen der Fernsteuervorrichtung (1) und den Mensch-Maschine-Schnittstellen, die zu bedienen sind, umfasst, wobei die Kommunikationseinrichtung (94) ein XML-Client-Modul (94₄) umfasst, das eine Funktionalität aufweist, um ein Kommunikationsprotokoll auf der Grundlage von XML-Dokumenten zum Senden und Empfangen der Information zu verwenden.

14. Fernsteuervorrichtung (1) nach Anspruch 13, **dadurch gekennzeichnet, dass** die Kommunikationseinrichtung (94) weiter eine Internet-Protokollschicht (94₁), eine Transportsteuer-Protokollschicht (94₂) unter Verwendung der Internet-Protokollschicht (94₁), eine Sockelschicht (94₃) unter Verwendung der Transportsteuer-Protokollschicht (94₂) umfasst, wobei das XML-Client-Modul (94₄) seine Kommunikationsaufgaben unter Verwendung der Sockelschicht (94₃) durchführt.

15. Fernsteuervorrichtung (1) nach Anspruch 13 oder 14, **gekennzeichnet durch** eine Extraktionseinrichtung zum Extrahieren der Information aus den XML-Dokumenten und/oder eine Einbettungseinrichtung zum Einbetten der Information in die XML-Dokumente.

16. Mensch-Maschine-Schnittstelle (5), die mit einer Fernsteuervorrichtung (1) über ein Kommunikationsnetz (3) verbindbar ist, wobei die Mensch-Maschine-Schnittstelle (5) eine Kommunikationseinrichtung (95) zum Austauschen von Information interaktiver Dialoge zwischen einem Benutzer der Mensch-Maschine-Schnittstelle und der Fernsteuervorrichtung (1) zwischen der Mensch-Maschine-Schnittstelle und der Fernsteuervorrichtung (1) umfasst, wobei die Kommunikationseinrichtung (95) ein XML-Server-Modul (95₄) umfasst, das eine Funktionalität aufweist, ein Kommunikationsprotokoll auf der Grundlage von XML-Dokumenten zum Senden und empfangen der Information zu verwenden.

17. Mensch-Maschine-Schnittstelle (5) nach Anspruch 16, **dadurch gekennzeichnet, dass** sie eine Einrichtung zum dynamischen Auswählen der Weise, wie eine Information, die von der Fernsteuervorrichtung (1) zu der Mensch-Maschine-Schnittstelle (5) gesendet wird, für den Benutzer (2) dargestellt wird, und/oder eine Einrichtung zum dynamischen Auswählen der Weise, wie eine Information, die von der Fernsteuervorrichtung (1) angefordert wird, in die Mensch-Maschine-Schnittstelle (5) eingegeben wird, umfasst.

18. Mensch-Maschine-Schnittstelle (5) nach Anspruch 16 oder 17, **gekennzeichnet durch** eine Render-Einrichtung (96), die mit der Kommunikationseinrichtung (95) verbunden ist, zum dynamischen Rendern einer Information in Abhängigkeit von einer Render-Information, die der Mensch-Maschine-Schnittstelle (5) zugeordnet ist.

19. Mensch-Maschine-Schnittstelle (5) nach einem der Ansprüche 16 bis 18, **gekennzeichnet durch** eine Eingabesteuereinrichtung (96) zum Handhaben von Eingabebetriebsschritten des Benutzers (2) bezüglich der Mensch-Maschine-Schnittstelle (5) dynamisch gemäß einer Eingabeinformation, die der Mensch-Maschine-Schnittstelle (5) zugeordnet ist.

20. Mensch-Maschine-Schnittstelle nach einem der Ansprüche 16 bis 19, **dadurch gekennzeichnet, dass** die Kommunikationseinrichtung (95) weiter eine Internet-Protokollschicht (95₁), eine Transportsteuer-Protokollschicht (95₂), die auf der Internet-Protokollschicht (95₁) basiert ist, eine Sockelschicht (95₃), die auf der Transportsteuer-Protokollschicht (95₂) basiert ist, umfasst, wobei das XML-Server-Modul (95₄) auf der Sockelschicht (95₃) basiert ist.

21. Mensch-Maschine-Schnittstelle (5) nach einem der Ansprüche 16 bis 20, **gekennzeichnet durch** eine Extraktionseinrichtung zum Extrahieren der Information aus den XML-Dokumenten und/oder eine Einbettungseinrichtung zum Einbetten der Information in die XML-Dokumente.

22. System zur Fernbedienung von Mensch-Maschine-Schnittstellen (5), umfassend
- eine Fernsteuervorrichtung (1) gemäß einem der Ansprüche 13 bis 15,
- zumindest eine Mensch-Maschine-Schnittstelle (5), die gemäß einem der Ansprüche 16 bis 21 zu bedienen ist, wobei die Fernsteuervorrichtung (1) und die zumindest eine Mensch-Maschine-Schnittstelle (5), die zu bedienen ist, jeweils über das Kommunikationsnetz (3) verbunden sind.

23. Computerprogrammprodukt, umfassend eine Computerprogrammeinrichtung, die ausgelegt ist, das Verfahren gemäß einem der Ansprüche 1 bis 12 durchzuführen, wenn es auf einem Satz von Vorrichtungen ausgeführt wird, wobei jede ein Computer oder ein digitaler Signalprozessor ist, wobei der Satz von Vorrichtungen die Mensch-Maschine-Schnittstellen und die Fernsteuervorrichtung einschließt.

## Revendications

1. Procédé pour actionner des interfaces homme-machine (5) via un dispositif de commande à distance (1) qui peut être connecté auxdites interfaces homme-machine (5) via un réseau de communication (3), ledit actionnement étant effectué en échangeant des informations de dialogues interactifs entre les utilisateurs desdites interfaces homme-machine et ledit dispositif de commande à distance (1) entre ledit dispositif de commande à distance (1) et lesdites interfaces homme-machine (5) devant être actionnées via ledit réseau de communication (3),
dans lequel ledit processus d'échange d'informations est au moins partiellement réalisé en utilisant dans les deux directions un protocole de communication basé sur des documents XML qui incluent lesdites informations.

2. Procédé selon la revendication 1, **caractérisé en ce que** lesdits documents XML comprennent des structures de balise XML qui contiennent respectivement des parties desdites informations.

3. Procédé selon la revendication 1 ou 2, **caractérisé par** l'utilisation desdits documents XML pour échanger lesdites informations entre ledit dispositif de commande à distance (1) et une passerelle (4) servant d'interface avec lesdites interfaces homme-machine (5) et ledit dispositif de commande, et l'utilisation d'un protocole de transfert spécifique à l'interface homme-machine pour échanger lesdites informations entre ladite passerelle (4) et lesdites interfaces homme-machine (5), ladite passerelle (4) transférant lesdites informations depuis lesdits documents XML audit protocole de transfert spécifique à l'interface homme-machine, ou transférant lesdites informations depuis ledit protocole de transfert spécifique à l'interface homme-machine auxdits documents XML.

4. Procédé selon l'une quelconque des revendications 1 à 3, **caractérisé en ce qu'**une interface homme-machine (5) choisit seule de manière dynamique la façon dont les informations envoyées depuis le dispositif de commande à distance (1) à ladite interface homme-machine (5) sont présentées à l'utilisateur (2), et/ou choisit seule de manière dynamique la façon dont les informations demandées par le dispositif de commande à distance (1) à l'utilisateur (2) doivent être entrées dans ladite interface homme-machine (5).

5. Procédé selon l'une quelconque des revendications 1 à 4, **caractérisé en ce qu'**au moins une partie desdites informations envoyées depuis ledit dispositif de commande à distance (1) auxdites interfaces homme-machine (5) est rendue pour créer des informations de communication rendues, lesdites informations de communication rendues étant ensuite présentées sur lesdites interfaces homme-machine (5) comme des informations de communication visibles ou audibles pour les utilisateurs respectifs (2).

6. Procédé selon la revendication 5, **caractérisé en ce que** ladite création d'informations de communication rendues est effectuée dans les interfaces homme-machine (5).

7. Procédé selon une combinaison des revendications 3 et 5, **caractérisé en ce que** ladite création d'informations de communication rendues est effectuée dans ladite passerelle (4), lesdites informations de communication rendues étant ensuite transférées auxdites interfaces homme-machine (5) devant être présentées à l'utilisateur (2).

8. Procédé selon la revendication 6 ou 7, **caractérisé en ce que** ladite création d'informations de communication rendues est effectuée en fonction des informations de rendu respectives assignées auxdites interfaces homme-machine (5), respectivement.

9. Procédé selon la revendication 8, **caractérisé en ce que** lesdites informations de rendu font partie desdites informations ou sont stockées dans lesdites interfaces homme-machine (5) et/ou ladite passerelle (4), respectivement.

10. Procédé selon l'une quelconque des revendications précédentes, **caractérisé en ce que** lesdites informations comprennent des données d'image et/ou des données de texte et/ou des données de son.

11. Procédé selon une combinaison des revendications 8 et 10, **caractérisé en ce que** lesdites données d'image et/ou données de texte et/ou données de son sont rendues en fonction desdites informations de rendu.

12. Procédé selon l'une quelconque des revendications précédentes, **caractérisé en ce que** lesdites interfaces homme-machine (5) choisissent de manière dynamique la façon d'entrer les informations souhaitées de la part de l'utilisateur (2) dans lesdites interfaces homme-machine (5) selon les informations d'entrée assignées respectivement auxdites interfaces homme-machine, lesdites informations d'entrée faisant partie desdites informations corrélées à l'interface homme-machine ou étant stockées dans lesdites interfaces homme-machine (5) et/ou ladite passerelle (4), respectivement.

13. Dispositif de commande à distance (1) pouvant être connecté à des interfaces homme-machine (5) devant être actionnées via un réseau de communication (3), ledit dispositif de commande à distance (1) comprenant un moyen de communication (94) destiné à échanger des informations de dialogues interactifs entre les utilisateurs desdites interfaces homme-machine et ledit dispositif de commande à distance (1) entre ledit dispositif de commande à distance (1) et lesdites interfaces homme-machine devant être actionnées, dans lequel ledit moyen de communication (94) comprend un module client XML (94₄) ayant une fonctionnalité pour utiliser un protocole de communication basé sur des documents XML pour envoyer et recevoir lesdites informations.

14. Dispositif de commande à distance (1) selon la revendication 13, **caractérisé en ce que** ledit moyen de communication (94) comprend en outre une couche de protocole Internet (94₁), une couche de protocole de contrôle de transport (94₂) utilisant ladite couche de protocole Internet (94₁), une couche d'échange (94₃) utilisant ladite couche de protocole de contrôle de transport (94₂), ledit module client XML (94₄) effectuant ses tâches de communication en utilisant ladite couche d'échange (94₃).

15. Dispositif de commande à distance (1) selon la revendication 13 ou 14, **caractérisé par** un moyen d'extraction destiné à extraire lesdites informations desdits documents XML et/ou un moyen d'intégration destiné à intégrer lesdites informations dans lesdits documents XML.

16. Interface homme-machine (5) pouvant être connectée à un dispositif de commande à distance (1) via un réseau de communication (3), ladite interface homme-machine (5) comprenant un moyen de communication (95) destiné à échanger des informations de dialogues interactifs entre un utilisateur de ladite interface homme-machine et ledit dispositif de commande à distance (1) entre ladite interface homme-machine et ledit dispositif de commande à distance (1), dans laquelle ledit moyen de communication (95) comprend un module serveur XML (95₄) ayant une fonctionnalité pour utiliser un protocole de communication basé sur des documents XML pour envoyer et recevoir lesdites informations.

17. Interface homme-machine (5) selon la revendication 16, **caractérisée en ce qu'**elle comprend un moyen destiné à choisir de manière dynamique la façon dont les informations envoyées depuis le dispositif de commande à distance (1) à ladite interface homme-machine (5) sont présentées à l'utilisateur (2), et/ou un moyen destiné à choisir de manière dynamique la façon dont les informations demandées par le dispositif de commande à distance (1) sont entrées dans ladite interface homme-machine (5).

18. Interface homme-machine (5) selon la revendication 16 ou 17, **caractérisée par** un moyen de rendu (96) connecté audit moyen de communication (95) pour rendre de manière dynamique les informations en fonction des informations de rendu assignées auxdites interfaces homme-machine (5).

19. Interface homme-machine (5) selon l'une quelconque des revendications 16 à 18, **caractérisée par** un moyen de commande d'entrée (96) destiné à gérer les opérations d'entrée dudit utilisateur (2) par rapport à ladite interface homme-machine (5) de manière dynamique selon les informations d'entrée assignées à ladite interface homme-machine (5).

20. Interface homme-machine (5) selon l'une quelconque des revendications 16 à 19, **caractérisée en ce que** ledit moyen de communication (95) comprend en outre une couche de protocole Internet (95₁), une couche de protocole de contrôle de transport (95₂) basée sur ladite couche de protocole Internet (95₁), une couche d'échange (95₃) basée sur ladite couche de protocole de contrôle de transport (95₂), ledit module serveur XML (95₄) étant basé sur ladite couche d'échange (95₃).

21. Interface homme-machine (5) selon l'une quelconque des revendications 16 à 20, **caractérisée par** un moyen d'extraction destiné à extraire lesdites informations desdits documents XML et/ou un moyen d'intégration destiné à intégrer lesdites informations dans lesdits documents XML.

22. Système destiné à actionner à distance des interfaces homme-machine (5), comprenant :
- un dispositif de commande à distance (1) selon l'une quelconque des revendications 13 à 15,
- au moins une interface homme-machine (5) devant être actionnée selon l'une quelconque des revendications 16 à 21, ledit dispositif de commande à distance (1) et ladite au moins une interface homme-machine (5) devant être actionnée étant respectivement connectés via ledit réseau de communication (3).

23. Produit de programme informatique comprenant un moyen de programme informatique adapté pour effectuer le procédé selon l'une quelconque des revendications 1 à 12 lorsqu'il est exécuté sur un ensemble de dispositifs, chacun étant un ordinateur ou un processeur de signal numérique, ledit ensemble de dispositifs incluant lesdites interfaces homme-machine et ledit dispositif de commande à distance.
